# EUROPEAN PATENT SPECIFICATION

(11) **EP 0 696 853 B1**
(45) Date of publication and mention of the grant of the patent: **23.03.2005**
(21) Application number: 95304865.9
(22) Date of filing: 12.07.1995
(51) Int. Cl.: H04B 1/20, H04L 29/06, H04N 7/24, H04L 12/64

(54) **Signal receiving apparatus**
Gerät zum Empfang von Signalen
Appareil de réception de signaux

(30) Priority: 15.07.1994 JP 18628594
(43) Date of publication of application: 14.02.1996
(73) Proprietor: SONY CORPORATION, Tokyo (JP)
(72) Inventor: Hayashi, Minobu, c/o Sony Corporation, Shinagawa-ku, Tokyo (JP)
(74) Representative: Ayers, Martyn Lewis Stanley

(56) References cited:
- EP-A- 0 462 349
- WO-A-86/03640
- US-A- 4 637 014
- TEENER M: "A BUS ON A DIET - THE SERIAL BUS ALTERNATIVE AN INTRODUCTION TO THE P1394 HIGH PERFORMANCE SERIAL BUS" INTELLECTUAL LEVERAGE, SAN FRANCISCO, FEB. 24 - 28, 1992, no. CONF. 37, 24 February 1992, INSTITUTE OF ELECTRICAL AND ELECTRONICS ENGINEERS, pages 316-321, XP000340753

## Description

The present invention relates to a signal receiving apparatus employed in a data communication system for performing a data communication among a plurality of electronic appliances mutually connected via a communication control bus. In this signal receiving apparatus, isochronous data irregularly received is transferred to a data processing unit without losing the isochronous data while synchronous data continuously received every predetermined time period is not interruptedly transferred to the data processing unit.

A communication system is conceivable such that a plurality of electronic appliances (will be simply referred to an "appliance" hereinafter) are connected by a communication control bus such as the P1394 serial bus on which a control signal and an information signal can be handled in a mixture manner, and then the information signal and the control signal are communicated.

It should be noted that a detailed description about the P1394 serial bus involving the node ID allocation sequence is opened as "IEEE P1394 Serial Bus Specification," issued on October 14, 1993.

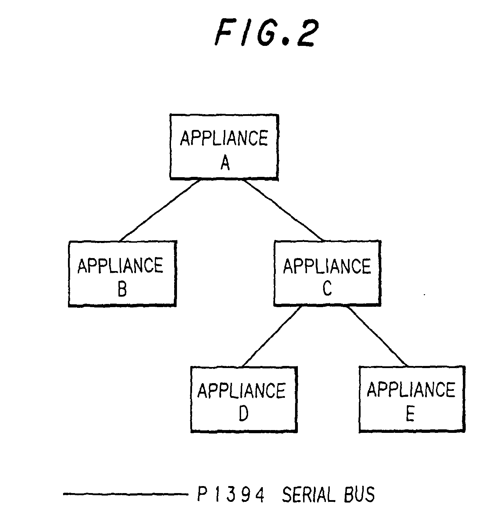

In Fig. 2, there is shown an example of such a communication system. This communication system is comprised of appliances A, B, C, D and E. Then, twist-paired cables of the P1394 serial bus are employed so as to connect the appliances between A and B; A and C; C and D; and C and E. These appliances are for instance, a digital VTR, a tuner, a monitor, a personal computer and so on. Since each of these appliances owns the function to relay an information signal and a control signal, which are inputted from the twist-paired cables, this system is equal to such a system that the respective appliances are connected to a common P1394 serial bus.

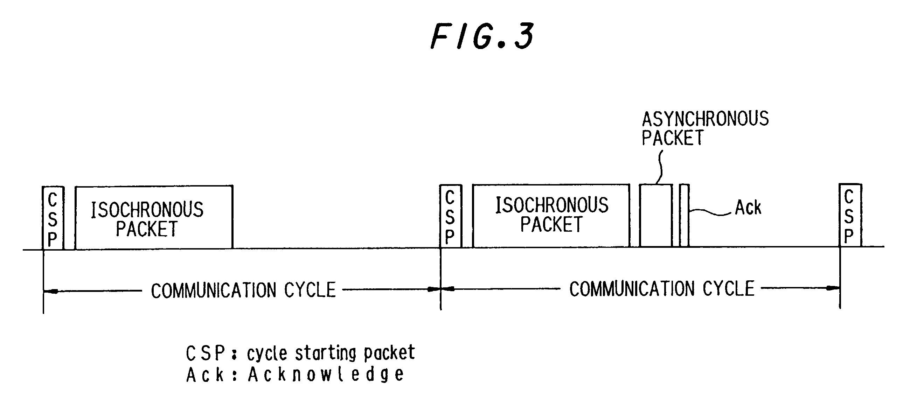

As represented in Fig. 3, the data transmission among the appliances A to E which commonly share the bus is carried out in the time division multiplex every predetermined communication cycle (for example, 125 µsec). The communication cycle on the bus is managed by that a so-termed "cycle master", e.g., the appliance A transfers an isochronous packet (cycle start packet) indicative of starting of the communication cycle to other appliances on the bus. Then, as a result, the data transmission in this communication cycle is commenced.

As a format of data transmitted within one communication cycle, there are two sorts of data, namely, isochronous data such as video data and audio data, and asynchronous data such as an operation command of an appliance. Then, a packet of isochronous data (will be referred to a "isochronous packet" hereinafter) is transmitted with priority, with respect to a packet of asynchronous data (will be referred to an "asynchronous packet" hereinafter).

A plurality of isochronous packets may be discriminated from each other by attaching channel numbers 1, 2, 3, ..., to the respective isochronous packets. A time period defined after all of the appliances which want to transmit the isochronous packets have transmitted the isochronous packets, and until the next cycle start packet, is used to transmit the asynchronous packet. It should be noted that Fig. 3 represents only one isochronous packet within 1 communication cycle.

An isochronous packet is continuously transmitted in every communication cycle until a transmission appliance has completed transmission of data to be transmitted. On the other hand, an asynchronous packet is solely transmitted if required. There is no problem, even when an asynchronous packet could not be transmitted in a certain communication cycle, when the asynchronous packet can be transmitted within a predetermined time period. To the contrary, an isochronous packet should be transmitted within every communication cycle.

Each of the appliances connected to the bus identifies the isochronous data directed thereto from the channel numbers written into the isochronous packet, and also identifies the asynchronous data directed thereto from the node IDs (namely, physical addresses of respective appliances, to which the node IDs are automatically allocated based on connecting relationship when respective appliances are connected to P1394 serial bus) written into the asynchronous packet.

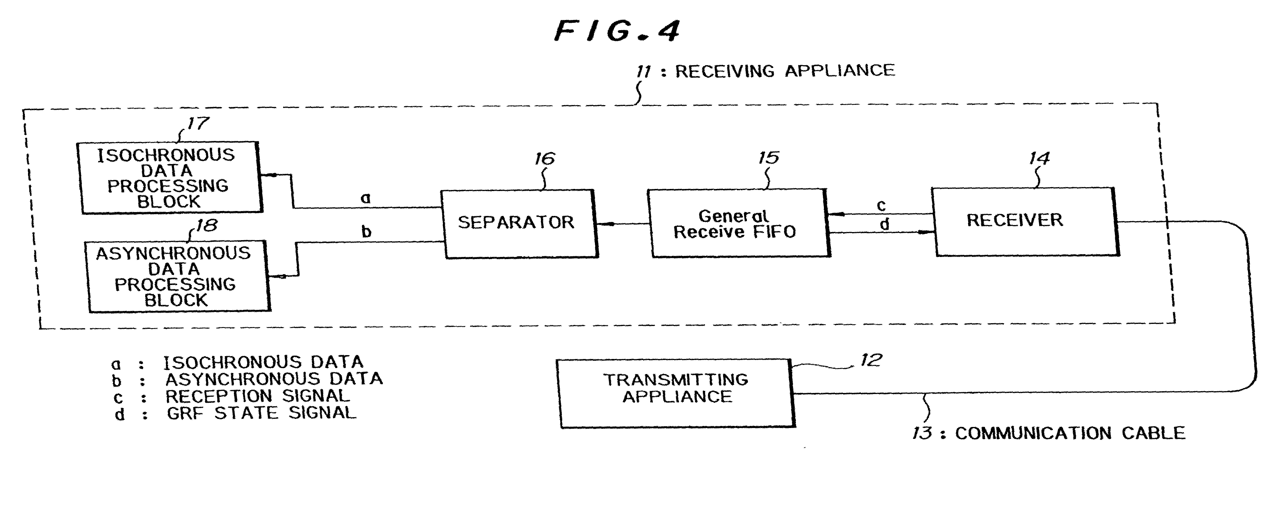

Fig. 4 is a block diagram for indicating an arrangement of a data receiving portion of an appliance employed in a communication system. As previously explained, a receiving appliance 11 and a transmitting appliance 12 are a digital VTR, a monitor, a personal computer and so on. More than one input/output port (not shown) of the respective appliances is connected with each other via two sets of communication cables (twisted-pair cables) 13 used to input/output data. It should be noted that although one appliance employed in the communication system receives the data from the other appliance, as shown in Fig. 4, there are other cases. For instance, either in the appliance A, or the appliance C of Fig. 2, one appliance receives the data from more than two other appliances within the same communication cycle, or transmits/receives the data to/from them.

The data transmitted from the transmitting appliance 12 is inputted via the communication cables 13 to a receiver 14 of the receiving appliance 11. To the receiver 14, a GRF state signal "d" is entered from a general receive FIFO (will be simply referred to a "GRF" hereinafter). Then, the receiver 14 can write a reception signal "c" into the GRF 15 unless this GRF state signal "d" is equal to "Full".

The receiver 14 identifies whether the packet of the reception signal "c" corresponds to the isochronous packet, or the asynchronous packet based upon the header of this packet. Then, when the reception signal "c" corresponds to the asynchronous packet and this asynchronous packet can be written into the GRF 15, the receiver 14 returns "OK Ack (Acknowledge; positive response)" indicative of reception OK to the transmitting appliance 12. When since the GRF state signal "d" is "Full", the received asynchronous data cannot be written into the GRF 15, the receiver 14 returns "Busy Ack" to the transmitting appliance 12. The transmitting appliance 12 to which "Busy Ack" has been returned tries to again transmit the same asynchronous packet within a time period during which the defined condition is satisfied.

On the other hand, in the case that the reception signal "c" is the isochronous packet, the reception signal "c" is written into the GRF 15 when the GRF state signal "d" is not "Full", whereas the reception signal "c" is discarded when the GRF state signal "d" is "Full".

The packets which have been written into the GRF 15 are successively read by a separator 16 in the order of the packet writing order, and are separated into the isochronous data "a" and the asynchronous data "b" based on the headers of the packets. Thus, the isochronous data "a" is inputted into an isochronous data processing block 17, and the asynchronous data "b" is entered into an asynchronous data processing block 18.

In the arrangement as shown in Fig. 4, even when the buffer memory having the sufficient memory capacity to the communication amount of the isochronous data is provided with the isochronous data processing block 17, and the buffer memory having the memory capacity corresponding to several asynchronous data packets is provided with the asynchronous data processing block 18, however, there is a problem. That is, when the reading speed of the asynchronous data packet is delayed as compared with the communication cycle, if the asynchronous data successively arrive, then the GRF 15 also becomes "Full" after the buffer memory employed in the asynchronous type data processing block 18 is brought into overflow conditions.

Under such a circumstance, when the received packet is the asynchronous packet, "Busy Ack" is returned to the transmitting appliance 12, and when the received packet is the isochronous packet, this isochronous packet is discarded.

As explained before, as to the asynchronous packet, the transmitting appliance 12 retransmits this asynchronous packet and the receiving appliance 11 again can receive it. However, the isochronous packet must be continuously received. However, since only one GRF 15 is provided with the receive buffer, there is only one sort of Full flag as to the isochronous data and the asynchronous data.

Thus, in order not to discard the isochronous data, if the Full flag is neglected and the isochronous packet is continuously written into the GRF 15, when the GRF 15 is under "Full" condition, this isochronous packet would be overwritten to the asynchronous data.

When doing so, since the "OK Ack" has been returned when the asynchronous packet is written into the GRF 15, the transmitting appliance 12 judges that the data packet could be received under normal condition, and therefore does not retransmit the data packet. Accordingly, this asynchronous packet will be lost.

The present invention has been made to solve such problems, and has an object to provide a signal receiving apparatus having a buffer with a minimum buffer size, capable of receiving an isochronous packet without any interruption and also of receiving an asynchronous packet without any loss.

EP-A-0462349 describes for a ring communication system, an access mechanism supported by medium access control means so that different kinds of traffic are optimally accommodated. Signalling information and isochronous data keep their position in a synchronous time raster while propagating on the ring, whereas variable-length data frames can be relatively shifted in their position during propagation on the ring, to allow for the insertion of additional variable-length data frames, thus giving to all stations attached to the ring a fair chance for transmitting such data frames. The data frames are partitioned into slot-size segments, and the mechanism guarantees that the segments of any data frame will not be interrupted by segments of another such data frame.

WO 86/03620 describes a communication system comprising a plurality-of communication stations connected in a ring around which a first number of blocks of first information and a second number of block of second information are alternately transmitted together with a leading synchronisation block. For example, the first set of information may comprise voice information while the second comprises data. Each communication station to which both sets of information are fed is adapted to separate the incoming information into the first and second sets, and is further adapted to insert information of both sets into the ring as a number of interleaved blocks for transmitting to a downstream station.

US 4,637,014 describes a method of transmitting isochronous and nonisochronous data in a computer network in which multiple stations have respective input and output ports that are serially coupled together to form a loop. The method includes the steps of: transmitting nonisochronous data from one station of the network and passing it through the remaining stations; periodically inserting into the nonisochronous data a lead control character followed by a trail control character and circulating the control characters twice around the network; increasing, in any station of the network that has isochronous data to send, the distance between the lead and trail control characters and sending isochronous data immediately before the trail control character as it passes through the station; subsequently decreasing the distance between the lead and trail control characters in each station of the network that performs the sending step by removing, from immediately behind the first lead control character to enter the station after the sending step begins, the same number of characters that it sent before the trail control character.

TEENER, M: "A Bus on a Diet - The Serial Bus Alternative", Intellectual Leverage, San Francisco, Feb 24 - 28, 1992, no. CONF 37, 24 February 1992, Institute of Electrical and Electronics Engineers, pages 316-321 describes the justifications for the use of a serial bus in computer systems. It then describes a leading proposal for such an interconnect: the proposed IEEE P1394 High Performance Serial Bus.

According to the present invention, there is provided a signal receiving apparatus for receiving isochronous data and asynchronous data transmitted from a transmitting apparatus and through a common serial bus in time division multiplexed isochronous data packets and asynchronous data packets with a predetermined communication cycle, each isochronous data packet comprising a channel number for discriminating the channel to which the isochronous data of that packet belongs and each asynchronous data packet comprising address information for identifying a destination signal receiving apparatus, the signal receiving apparatus comprising:
a receiver for receiving isochronous data and asynchronous data transmitted through said common serial bus and for identifying data addressed to the signal receiving apparatus using the channel number in an isochronous data packet and the address information in an asynchronous data packet;
a separator for separating the data identified by the receiver as data addressed to the signal receiving apparatus into isochronous data and asynchronous data;
a first temporary storage means including an isochronous first-in-first-out memory for storing isochronous data and a second temporary storage means including an asynchronous first-in-first-out memory for storing asynchronous data;
an isochronous data processing means for reading out the isochronous data stored in said first temporary storage means and for processing the isochronous data; and
an asynchronous data processing means for reading out the asynchronous data stored in said second temporary storage means and for processing the asynchronous data; wherein
   the separator has outputs connected to said first and second temporary storage means and an input connected to said receiver and is arranged to transfer separated isochronous data to said isochronous first-in-first-out memory and to transfer separated asynchronous data to said asynchronous first-in-first-out memory;
   the capacity of said first temporary storage means is set according to the data length of the isochronous data packets, the number of isochronous data packets in the predetermined communication cycle, write timing to said first temporary storage means by said separator and read timings from said first temporary storage means by said isochronous data processing means so that said first temporary storage means is not full;
   when said second temporary storage means is available to store data, the asynchronous data transferred from said separator is stored in said second temporary storage means and a response of success is transmitted to said transmitting apparatus through said common serial bus; and
   when said second temporary storage means is not available to store data, the asynchronous data transferred from said separator is not stored in said second temporary storage means and a response of failure is transmitted to said transmitting apparatus through said common serial bus.

The isochronous data is, for instance, control data of a video appliance.

In accordance with the present invention, since there are provided the temporary storage means for the isochronous data and also the temporary storage means for the asynchronous data, it is possible to avoid that the isochronous data is lost because the temporary storage means is fully filled with the asynchronous data.

As previously explained, in accordance with the present invention, since the temporary storage means for storing the data packets sent from the receiver are separately provided with respect to the isochronous data and the asynchronous data, interruptions of receiving the isochronous data can be prevented and also the asynchronous data can be received without any loss without increasing the memory capacity of the overall temporary storage means.

### BRIEF DESCRIPTION OF THE DRAWINGS

For a better understanding of the present invention, reference is made of the detailed description to be read in conjunction with the accompanying drawings, in which:
Fig. 1 is a schematic block diagram for showing a data receiving portion of a signal receiving apparatus according to an embodiment of the present invention;
Fig. 2 schematically illustrates an example of the communication system with employment of the P1394 serial bus;
Fig. 3 schematically represents an example of the communication cycle in the communication system with employment of the P1394 serial bus; and
Fig. 4 is a schematic block diagram for showing the conventional data receiving portion of the electronic appliance employed in the communication system.

### BRIEF DESCRIPTION OF THE PREFERRED EMBODIMENTS

Referring now to drawings, a signal receiving apparatus according to the present invention will be described.

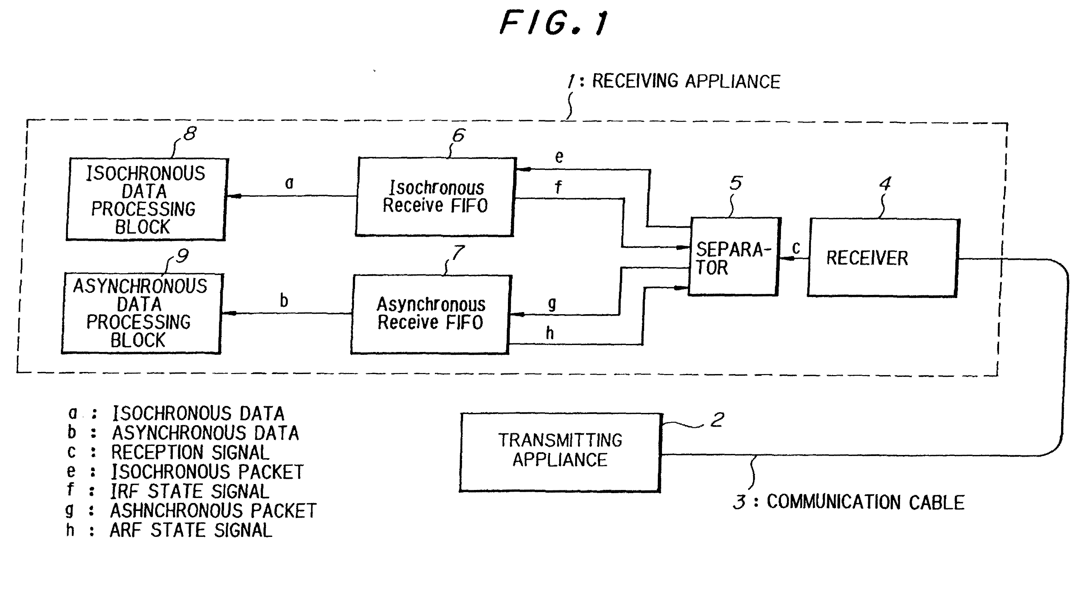

Fig. 1 is a schematic block diagram for representing a data receiving portion of a signal receiving apparatus according to an embodiment of the present invention.

In Fig. 1, data transmitted from a transmitting appliance 2 is entered via a communication cable 3 to a receiver 4 of a receiving apparatus 1. When a received asynchronous packet corresponds to a packet directed to the receiver 1, namely when a destination address of a header of the packet received by the receiver 4 corresponds to a node ID of the own appliance, the receiving appliance 1 sends the asynchronous packet to a separator 5. Also when a channel number allocated to the own appliance and the transmitting appliance 2 for the communication purpose is written in the received isochronous packet, this received isochronous packet is sent to the separator 5.

The separator 5 discriminates the isochronous packet from the asynchronous packet based on a packet identification code written into the header of the packet. Then, when an IRF state signal "f" entered from an Isochronous Receive FIFO (simply referred to an "IRF" hereinafter) 6 is not "Full", an isochronous packet "e" is written into the IRF 6.

Also, when an ARF state signal "h" entered from a Asynchronous Receive FIFO (simply referred to an "ARF" hereinafter) 7 is not "Full", an asynchronous packet "g" is written into the ARF 7, and then such a fact that the asynchronous packet "g" has been written into the ARF 7 is notified to the receiver 4. Upon receipt of this notification, the receiver 4 returns "OK Ack" to the transmitting appliance 2.

On the other hand, when the ARF state signal "h" is "Full", the asynchronous packet "g" is not written into the ARF 7 but is discarded, and such a fact that this asynchronous packet "g" has been discarded is notified to the receiver 4. Upon receipt of this notification, the receiver 4 returns "Busy Ack" to the transmitting appliance 2. As previously explained, even if the asynchronous packet is not written into the ARF 7 but is discarded, when the appliance which has transmitted this asynchronous packet receives "Busy Ack", this appliance can recognize that although this asynchronous packet has arrived at the destination appliance, this destination appliance could not receive this asynchronous packet due to Busy state. Then, since the asynchronous packet can be retransmitted from this appliance, this asynchronous packet is not lost.

The isochronous packet "e" written into the IRF 6 is read out by an isochronous data processing block 8 in the packet writing order, and a predetermined process is carried out thereto. Similarly, the asynchronous packet "g" written into the ARF 7 is read out by an asynchronous data processing block 8 in the packet writing order, and a predetermined process is carried out thereto.

When the isochronous data "a" and the asynchronous data "b" are read out from the IRF 6 and the AFR 7, since the storage capacities of these FIFOs are empty, the isochronous packet "e" and the asynchronous packet "g" can be written therein.

As a consequence, as to the data length of the isochronous packet and the number of received isochronous packet within the communication cycle, and also the read/write timings to the FIFOs, the capacities of the FIFOs in the IRF 6 are properly set in such a way that the IRF 6 is not "Full" during the normal condition, so that the asynchronous data can be received without losing the isochronous data.

## Claims

1. A signal receiving apparatus for receiving isochronous data and asynchronous data transmitted from a transmitting apparatus (2) and through a common serial bus (3) in time division multiplexed isochronous data packets and asynchronous data packets with a predetermined communication cycle, each isochronous data packet comprising a channel number for discriminating the channel to which the isochronous data of that packet belongs and each asynchronous data packet comprising address information for identifying a destination signal receiving apparatus, the signal receiving apparatus comprising:
a receiver (4) for receiving isochronous data and asynchronous data transmitted through said common serial bus (3) and for identifying data addressed to the signal receiving apparatus using the channel number in an isochronous data packet and the address information in an asynchronous data packet;
a separator (5) for separating the data identified by the receiver (4) as data addressed to the signal receiving apparatus into isochronous data and asynchronous data;
a first temporary storage means (6) including an isochronous first-in-first-out memory for storing isochronous data and a second temporary storage means (7) including an asynchronous first-in-first-out memory (7) for storing asynchronous data;
an isochronous data processing means (8) for reading out the isochronous data stored in said first temporary storage means (6) and for processing the isochronous data; and
an asynchronous data processing means (9) for reading out the asynchronous data stored in said second temporary storage means (7) and for processing the asynchronous data; wherein
the separator (5) has outputs connected to said first and second temporary storage means (6, 7) and an input connected to said receiver (4) and is arranged to transfer separated isochronous data to said isochronous first-in-first-out memory (6) and to transfer separated asynchronous data to said asynchronous first-in-first-out memory (7);
the capacity of said first temporary storage means (6) is set according to the data length of the isochronous data packets, the number of isochronous data packets in the predetermined communication cycle, write timing to said first temporary storage means (6) by said separator (5) and read timings from said first temporary storage means (6) by said isochronous data processing means (8) so that said first temporary storage means (6) is not full;
when said second temporary storage means (7) is available to store data, the asynchronous data transferred from said separator (5) is stored in said second temporary storage means (7) and a response of success is transmitted to said transmitting apparatus (2) through said common serial bus (3); and
when said second temporary storage means (7) is not available to store data, the asynchronous data transferred from said separator (5) is not stored in said second temporary storage means (7) and a response of failure is transmitted to said transmitting apparatus (2) through said common serial bus (3).

2. A signal receiving apparatus as claimed in claim 1, wherein:
the isochronous data is video data, and the asynchronous data is control data of a video appliance.

## Patentansprüche

1. Signalempfangsvorrichtung zum Empfangen von Isochrondaten und Asynchrondaten, die von einer Sendevorrichtung (2) und durch einen gemeinsamen seriellen Bus (3) in Zeitmultiplex-Isochrondatenpaketen und Asynchrondatenpaketen mit einem vorbestimmten Kommunikationszyklus übertragen werden, wobei das Isochrondatenpaket eine Kanalnummer zum Unterscheiden des Kanals, zu dem die Isochrondaten dieses Pakets gehören, aufweist und jedes Asynchrondatenpaket Adressinformationen zum Identifizieren einer Zielsignalempfangsvorrichtung aufweist, wobei die Signalempfangsvorrichtung aufweist:
einen Empfänger (4) zum Empfangen der Isochrondaten und der Asynchrondaten, die durch den gemeinsamen seriellen Bus (3) übertragen werden, und
zum Identifizieren der der Signalempfangsvorrichtung adressierten Daten unter Verwendung der Kanalnummer in einem Isochrondatenpaket und der Adressinformationen in einem Asynchrondatenpaket;
eine Trennvorrichtung (5) zum Trennen der durch den Empfänger (4) als der Signalempfangsvorrichtung adressierte Daten identifizierten Daten in Isochrondaten und Asynchrondaten;
eine erste Pufferspeichereinrichtung (6) mit einem Isochronsilospeicher zum Speichern von Isochrondaten und eine zweite Pufferspeichereinrichtung (7) mit einem Asynchronsilospeicher (7) zum Speichern von Asynchrondaten; eine Isochrondatenverarbeitungseinrichtung (8) zum Auslesen der in der ersten Pufferspeichereinrichtung (6) gespeicherten Isochrondaten und zum Verarbeiten der Isochrondaten; und
eine Asynchrondatenverarbeitungseinrichtung (9) zum Auslesen der in dem zweiten Pufferspeicher (7) gespeicherten Asynchrondaten und zum Verarbeiten der Asynchrondaten, wobei
die Trennvorrichtung (5) Ausgänge, die mit der ersten und der zweiten Pufferspeichereinrichtung (6, 7) verbunden sind, und einen Eingang, der mit dem Empfänger (4) verbunden ist, aufweist und zum Übertragen der getrennten Isochrondaten zu dem Isochronsilospeicher (6) und zum Übertragen der getrennten Asynchrondaten zu dem Asynchronsilospeicher (7) angeordnet ist,
die Kapazität der ersten Pufferspeichereinrichtung (6) entsprechend der Datenlänge der Isochrondatenpakete, der Anzahl der Isochrondatenpakete in dem vorbestimmten Kommunikationszyklus, einem Schreibtakt in die erste Pufferspeichereinrichtung (6) durch die Trennvorrichtung (5) und Lesetakten aus der ersten Pufferspeichereinrichtung (6) durch die Isochrondatenverarbeitungseinrichtung (8) so eingestellt ist, dass die erste Pufferspeichereinrichtung (6) nicht voll ist,
wenn die zweite Pufferspeichereinrichtung (7) zum Speichern von Daten zur Verfügung steht, die von der Trennvorrichtung (5) übertragenen Asynchrondaten in der zweiten Pufferspeichereinrichtung (7) gespeichert werden und eine Erfolgsantwort an die Sendevorrichtung (2) durch den gemeinsamen seriellen Bus (3) übertragen wird, und
wenn die zweite Pufferspeichereinrichtung (7) nicht zum Speichern von Daten zur Verfügung steht, die von der Trennvorrichtung (5) übertragenen Asynchrondaten nicht in der zweiten Pufferspeichereinrichtung (7) gespeichert werden und eine Fehlerantwort an die Sendevorrichtung (2) durch den gemeinsamen seriellen Bus (3) übertragen wird.

2. Signalempfangsvorrichtung nach Anspruch 1, bei welcher die Isochrondaten Videodaten sind, und die Asynchrondaten Steuerdaten einer Videovorrichtung sind.

## Revendications

1. Appareil de réception de signal pour la réception de données isochrones et de données asynchrones émises par un appareil d'émission (2) et à travers un bus de série commun (3) dans des paquets de données isochrones multiplexés par répartition temporelle et des paquets de données asynchrones avec un cycle de communication prédéterminé, chaque paquet de données isochrones comprenant un nombre de canaux pour discriminer le canal auquel les données isochrones de ce paquet appartiennent et chaque paquet de données asynchrones comprenant des informations d'adresse pour identifier un appareil de réception de signal de destination, l'appareil de réception de signal comprenant :
un récepteur (4) pour recevoir des données isochrones et des données asynchrones émises à travers ledit bus de série commun (3) et pour identifier des données adressées à l'appareil de réception de signal utilisant le numéro de canal dans un paquet de données isochrones et les informations d'adresse dans un paquet de données asynchrones ;
un séparateur (5) pour séparer les données identifiées par le récepteur (4) comme des données adressées à l'appareil de réception de signal dans des données isochrones et des données asynchrones;
un premier moyen de stockage temporaire (6) comprenant une mémoire premier entré premier sorti isochrone pour stocker des données isochrones et un second moyen de stockage temporaire (7) comprenant une mémoire premier entré premier sorti asynchrone (7) pour stocker des données asynchrones ;
un moyen de traitement de données isochrones (8) pour extraire les données isochrones stockées dans ledit premier moyen de stockage temporaire (6) et pour traiter les données isochrones ; et
un moyen de traitement de données asynchrones (9) pour extraire les données asynchrones stockées dans ledit second moyen de stockage temporaire (7) et pour traiter les données asynchrones ; dans lequel
le séparateur (5) a des sorties raccordées auxdits premier et second moyens de stockage temporaire (6, 7) et une entrée raccordée audit récepteur (4) et est disposé pour transférer des données isochrones séparées à ladite mémoire premier entré premier sorti isochrone (6) et pour transférer des données asynchrones séparées à ladite mémoire asynchrone premier entré premier sorti (7);
la capacité dudit premier moyen de stockage temporaire (6) est réglée selon la longueur des données des paquets de données isochrones, le nombre de paquets de données isochrones dans le cycle de communication prédéterminé, une temporisation d'écriture pour ledit premier moyen de stockage temporaire (6) par ledit séparateur (5) et des temporisations de lecture à partir dudit premier moyen de stockage temporaire (6) par ledit moyen de traitement de données isochrones (8) pour que ledit premier moyen de stockage temporaire (6) ne soit pas plein ;
lorsque ledit second moyen de stockage temporaire (7) est disponible pour stocker des données, les données asynchrones transférées à partir dudit séparateur (5) sont stockées dans ledit second moyen de stockage temporaire (7) et une réponse de succès est émise audit appareil d'émission (2) à travers ledit bus de série commun (3) ; et
lorsque ledit second moyen de stockage temporaire (7) n'est pas disponible pour stocker des données, les données asynchrones transférées par ledit séparateur (5) ne sont pas stockées dans ledit second moyen de stockage temporaire (7) et une réponse de défaillance est émise audit appareil d'émission (2) via ledit bus de série commun (3).

2. Appareil de réception de signal comme revendiqué dans la revendication 1, dans lequel :
les données isochrones sont des données vidéo, et les données asynchrones sont des données de commande d'un appareil vidéo.
